Europäisches Patentamt

European Patent Office

Office européen des brevets

(19)

(11) **EP 0 760 386 B1**

(12) **FASCICULE DE BREVET EUROPEEN**

(45) Date de publication et mention
de la délivrance du brevet:
**30.10.2002 Bulletin 2002/44**

(51) Int Cl.⁷: **C08L 95/00**, E01C 7/18

(21) Numéro de dépôt: **96401754.5**

(22) Date de dépôt: **08.08.1996**

(54) **Utilisation d'un liant bitumineux très dur dans la préparation d'un enrobé bitumineux, destiné notamment aux assises de chaussées**

Verwendung eines sehr harten Bitumenbindemittels für die Herstellung eines bituminösen Mischgutes, vor allem bestimmt für den Strassenunterbau

Use of very hard asphalt binder in the preparation of bituminous covering, especially used in road underlayers

(84) Etats contractants désignés:
**AT BE CH DE DK ES FI FR GB GR IE IT LI LU NL PT SE**

(30) Priorité: **25.08.1995 FR 9510097**

(43) Date de publication de la demande:
**05.03.1997 Bulletin 1997/10**

(73) Titulaire: **TOTAL RAFFINAGE DISTRIBUTION S.A.**
**92800 Puteaux (FR)**

(72) Inventeurs:
• **Malot, Michel**
**Saint-Eustache-La-Forêt, 76210 Bolbec (FR)**

• **Jolivet, Yannick**
**76600 Le Havre (FR)**

(74) Mandataire: **Jolly, Jean-Pierre et al**
**Cabinet Jolly**
**54, rue de Clichy**
**75009 Paris (FR)**

(56) Documents cités:
**EP-A- 0 041 881**      **EP-A- 0 482 971**
**FR-A- 2 227 294**

**Description**

La présente invention concerne l'utilisation d'un liant bitumineux très dur dans la préparation d'un enrobé bitumineux, destiné notamment aux assises de chaussées.

On sait que le bitume peut être obtenu, notamment, à partir du pétrole brut, par distillation de celui-ci et/ou par désasphaltage de la fraction lourde issue de la (ou les) distillation (s).Le bitume est constitué, selon l'origine du pétrole brut, de proportions variables d'huiles saturées paraffiniques ou naphténiques ou aromatiques, de résines et d'asphaltènes (on peut, pour avoir plus de détails à ce sujet, se reporter au brevet EP 246 956, dont la Demanderesse est titulaire).

On sait également que les enrobés bitumineux sont des compositions réalisées à partir de bitumes et de granulats minéraux, le bitume jouant le rôle d'un liant assurant la cohésion du matériau.

On appelle résistance à l'orniérage d'un matériau la propriété de résister aux phénomènes de fluage pouvant être générés par le trafic, en particulier lourd et lent, dans des conditions climatiques chaudes.

On appelle tenue à la fatigue mécanique d'un matériau la propriété de supporter les sollicitations en traction générées par le trafic, dans des conditions climatiques moyennes ou froides.

Il est connu que les bitumes durs, c'est-à-dire dont la pénétrabilité à 25 °C est comprise entre 10 et 25 et la température de ramollissement supérieure à 60 °C, appelée température "bille-anneau" à cause de la méthode utilisée pour la mesurer, sont obtenus en particulier à partir du pétrole brut par distillation directe et/ou désasphaltage.

Même si, lors de son utilisation dans la préparation d'enrobés bitumineux routiers, un bitume dur apporte audit enrobé des propriétés recherchées, telles que la résistance à l'orniérage et la tenue à la fatigue, il est connu que, plus ce bitume est dur, plus il présente des risques de provoquer des fissurations d'origine mécanique et/ou thermique, susceptibles de se développer dans l'enrobé.

L'utilisation de bitume dur pose donc des problèmes bien connus, dont les professionnels de la route sont conscients, et trouver une solution à ces problèmes fait partie de leurs préoccupations actuelles.

C'est ainsi que certains industriels ont proposé d'utiliser ces bitumes durs dans la préparation d'enrobés bitumineux destinés à la construction de chaussées, comme en particulier la Société Travaux Produits Routiers, dans son brevet FR 2 483 938. On y décrit, en effet, un nouveau mélange bitumineux pour application routière, utilisant un bitume qui possède une pénétrabilité à 25 °C comprise entre 5 et 20, une température d'enrobage de 175 °C et un module de rigidité compris entre $16.10^3$ et $24.10^3$ MPa.

Cependant, il est connu que, lorsque la pénétrabilité à 25°C est inférieure à 10 et le module de rigidité de l'enrobé est supérieur à $24.10^3$ MPa, le bitume est considéré comme trop dur pour pouvoir être utilisé. Ce type de bitume n'a donc pas, jusqu'à ce jour, de valorisation possible dans les applications routières.

En poursuivant ses travaux de recherches dans ce domaine et contrairement aux enseignements de la technique antérieure, la Demanderesse a mis en évidence que, de manière surprenante, il est désormais possible d'utiliser des bitumes dits très durs pour la préparation d'enrobés bitumineux destinés à la construction de chaussées, à condition de faire appel à une teneur en bitume dans l'enrobé supérieure à ce que préconise l'état de la technique. La Demanderesse a, par ailleurs, établi qu'en recourant à de telles teneurs élevées en bitumes dits très durs, il est possible d'utiliser dans une chaussée, une épaisseur de l'enrobé bitumineux inférieure aux épaisseurs usuelles.

Le but de la présente invention est donc de valoriser des bitumes très durs, en les utilisant dans la réalisation d'enrobés bitumineux destinés notamment aux assises de chaussées, et en répondant ainsi au problème que pose leur valorisation.

A cet effet, la présente invention a pour premier objet l'utilisation d'un bitume très dur, ayant une pénétrabilité à 25°C comprise entre 0 et 20, dans la préparation d'un enrobé bitumineux dont le module de rigidité est supérieur à $24.10^3$ MPa, notamment destiné à la réalisation ou au renforcement de chaussées, caractérisée en ce que la teneur en bitume de l'enrobé est supérieure à 6 parties pour cent en poids.

L'invention a également pour objet un enrobé bitumineux, destiné notamment à la réalisation ou au renforcement de chaussées, caractérisé en ce qu'il contient plus de 6 parties pour cent en poids d'un bitume ayant une pénétrabilité à 25°C comprise entre 0 et 20 et dont le module de rigidité est supérieur à $24.10^3$ Mpa.

Dans ces objets de l'invention et dans la suite de la présente description, la pénétrabilité est mesurée conformément à la norme AFNOR NFT 66-004, et le module de rigidité est déterminé conformément à la méthode TOTAL 762-94.

Au sens de la présente invention, le bitume jouant le rôle de liant peut être soit un bitume dit "naturel", soit un bitume dit "synthétique". Le bitume naturel peut en particulier être tiré du pétrole brut, des schistes bitumineux, d'huiles lourdes, de sable bitumineux.

Le bitume naturel peut être, par exemple :

   a) la fraction la plus lourde obtenue par distillation directe sous pression atmosphérique ou sous pression réduite d'un pétrole brut ;

b) la phase lourde obtenue par désasphaltage au solvant d'une fraction lourde selon a) ;

c) le produit de l'oxydation, en présence ou non de catalyseurs, d'une fraction lourde selon a) ou d'une phase lourde selon b);

d) le produit de l'oxydation, en présence ou non de catalyseurs, d'un mélange d'une fraction lourde selon a) ou d'une phase lourde selon b) et

- d'un distillat, ou
- d'un extrait aromatique obtenu dans la désaromatisation des huiles lubrifiantes, ou encore
- d'un brai de désasphaltage ;

e) un mélange d'un produit oxydé obtenu selon c) et d) ou d'une phase dure, et

- d'un distillat, ou
- d'un extrait aromatique obtenu dans la désaromatisation des huiles lubrifiantes, ou
- d'un brai de désasphaltage, ou encore
- d'une fraction lourde selon a) ou d'une phase lourde selon b) ;

f) une base viscoréduite, seule ou en mélange avec un ou plusieurs des produits ci-dessus ;

g) un des produits obtenus en a)et en f) en mélange avec

- un distillat, ou
- un extrait aromatique obtenu dans la désaromatisation des huiles lubrifiantes, ou
- un brai de désasphaltage, ou
- une fraction lourde aromatique ("slurry catalytique"), issue d'un procédé de craquage catalytique.

Le bitume utilisable peut être également un bitume synthétique ayant des caractéristiques voisines de celles d'un bitume "naturel" tel que décrit ci-dessus, et peut être par exemple un liant synthétique clair, colorable par addition de pigments. Il peut être par exemple constitué de résines de pétrole ou de résine indène-coumarone, en mélange avec des hydrocarbures aromatiques et/ou paraffiniques. De telles résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse. De leur côté, les résines indène-coumarone sont généralement obtenues à partir des goudrons de houille.

Quel que soit le bitume choisi pour jouer le rôle de liant, ce sera un bitume très dur, dont la pénétrabilité sera comprise entre 0 et 10, ce qui conduit à un enrobé dont le module de rigidité est supérieur à $24.10^3$ MPa.

Le bitume utilisable selon l'invention est préparé par simple mélange ou par soufflage du mélange obtenu à partir des différents constituants. La Demanderesse a ainsi testé avec succès, en particulier, un bitume obtenu à partir de bases dures de distillation directe ayant une pénétrabilité comprise entre 15 et 25, et d'une fraction lourde obtenue lors de la distillation sous pression atmosphérique ou réduite du pétrole brut ou de produits obtenus par des procédés tels que le craquage catalytique ou thermique. Cette fraction lourde est, de préférence, telle que, lors de sa distillation, on obtienne moins de 5 % de distillat à une température égale ou supérieure à 350 °C, de préférence 400 °C.

Toutes les distillations citées ci-dessus sont effectuées selon la norme ASTM D 1160.

Le granulat minéral utilisable pour la préparation de l'enrobé présente une composition granulométrique de, par exemple, 0/14 ou 0/20 et peut être un mélange de gravillons, de sable et de filler. Les caractéristiques de ce granulat sont telles qu'elles répondent à la norme P18-101.

La Demanderesse a ainsi utilisé avec succès une composition dite "matériaux Meilleraie" possédant une granulométrie de 0/14 et dont la formulation est la suivante :

- 42 % de sable        0/2
- 10 % de gravillons      2/4
- 10 % de gravillons      4/6
- 13 % de gravillons      6/10
- 23 % de gravillons      10/14
- 2 % d'un filler.

L'enrobé bitumineux est préparé en mélangeant le bitume et le granulat minéral à une température comprise entre 180 °C et 200 °C, sous un débit compris entre 30 et 500 t/h et dans des conditions d'enrobage ne nécessitant pas un materiel spécifique.

Puis une opération de compactage de l'enrobé est réalisée, de manière à ce que le bitume s'incorpore correctement dans les granulats minéraux et que le comportement mécanique soit optimum.

Le bitume utilisé pour la mise en oeuvre de l'invention peut avoir une teneur de 6 à 8 parties pour cent en poids de bitume dans l'enrobé, ce qui est nettement au delà de la valeur minimale de 6 parties pour cent que préconise la technique antérieure. La Demanderesse a en effet établi qu'en utilisant un bitume très dur, il est désormais possible d'augmenter la fraction de bitume dans les chaussées, ce qui est un avantage en termes de performances mécaniques et thermiques.

Cette teneur en bitume élevée P est calculée à partir de la relation classique $P = K^5\sqrt{\Sigma} \cdot \alpha$, où P désigne la teneur en bitume de l'enrobé , exprimée en % en poids, K désigne le module de richesse, $\Sigma$ désigne la surface spécifique conventionnelle des granulats et $\alpha$ est le rapport

$$\frac{2,65}{\text{masse spécifique du granulat.}}$$

Le module de richesse K est alors compris entre 3,8 et 4,5. La compacité de l'enrobé (teneur en granulats de l'enrobé) est supérieure à 95 %, de manière à avoir un comportement mécanique optimum.

En effet, une quantité insuffisante de bitume dans l'enrobé entraîne des problèmes de fissuration à tous les niveaux de la chaussée, et une quantité trop élevée de bitume entraîne des problèmes d'orniérage sur la route. Une quantité de bitume conforme à l'invention facilite en revanche une auto-réparation.

L'épaisseur que doit présenter l'enrobé bitumineux formant la couche d'assise de la chaussée peut, selon l'invention, être comprise entre 5 et 30 cm. Ceci constitue un sérieux avantage par rapport aux épaisseurs classiques rencontrées dans la technique antérieure, qui sont, comme le montrent les exemples ci-après, de l'ordre de 40 à 50 cm. Ainsi, une quantité moindre d'enrobé est nécessaire à la construction de la chaussée, d'où une nette réduction des coûts de mise en oeuvre.

Les couches d'assise que décrit le plus couramment la technique antérieure sont constituées soit d'un matériau traité avec des liants hydrauliques, en particulier la grave-ciment ou la grave-laitier, soit d'un enrobé bitumineux de type grave-bitume.

On appelle "grave-ciment", un matériau contenant un mélange de granulats, tels que par exemple du sable, des gravillons ou du filler, et du ciment.

On appelle "grave-laitier", un matériau contenant un mélange de granulats, tels que par exemple du sable, des gravillons ou du filler, et du laitier.

On appelle "grave-bitume", un matériau contenant un mélange de granulats, tels que par exemple du sable, des gravillons ou du filler, et un bitume.

On appelle $\sigma_6$, la contrainte pour laquelle il y a rupture de l'éprouvette après $10^6$ chargements à l'essai effectué selon la méthode TOTAL 762-94.

On appelle $\varepsilon_6$, la déformation pour laquelle il y a rupture de l'éprouvette après $10^6$ chargements à l'essai effectué selon la méthode TOTAL 762-94.

Les matériaux traités aux liants hydrauliques présentent un bon effet structurel, car ils conduisent, de par la présence de ciment ou de laitier, à des modules de rigidité élevés, de l'ordre de $15.10^3$ à $35.10^3$ MPa. une résistance à la fatigue conduit à une valeur de $\sigma_6$ de l'ordre de 0,85 MPa. Mais cet effet n'est atteint qu'après un temps de prise relativement long, de l'ordre de plusieurs semaines, et on note également une fissuration d'origine thermique.

Les enrobés bitumineux de type grave-bitume selon la norme NFP 98-138 sont connus pour présenter l'avantage de conférer, de par leur caractère viscoélastique dû à la présence de bitume, des possibilités de déformation se traduisant par une résistance à la fatigue d'au moins $0,8.10^{-4}$, mais leur module de rigidité dépasse rarement $11.10^3$ MPa à 15°C et 10 Hz. Le module de rigidité est mesuré selon la norme NFP 98-260 2.

Comme le montrent les exemples ci-après, l'utilisation selon l'invention de bitume très dur permet d'obtenir pour l'enrobé, à la fois les propriétés de rigidité des matériaux traités aux liants hydrauliques, et les propriétés viscoélastiques des enrobés bitumineux.

En effet, ledit enrobé présente un module de rigidité supérieur à $24.10^3$ MPa à 15 °C et 10 Hz et une tenue en fatigue à contrainte imposée conduisant à une valeur de $\sigma_6$ comprise entre à 1 MPa et 2,5 MPa à 15 °C et 25 Hz, et une tenue en fatigue à déformation imposée conduisant à une valeur de $\varepsilon_6$ supérieure à $0,8.10^{-4}$.

De telles propriétés sont indispensables pour une couche d'assise, qui doit assurer, au sein de toute la chaussée, une bonne répartition des contraintes et des déformations engendrées par le trafic routier en surface.

Cette couche d'assise sera placée par exemple entre le sol naturel, ou une grave non traitée posée sur le sol, et la couche de roulement qui se trouve directement en contact avec les véhicules. L'utilisation, selon l'invention, d'un bitume très dur pour la préparation d'un enrobé bitumineux destiné aux assises de chaussées est valable aussi bien pour la construction de chaussées neuves que pour le renforcement de chaussées existantes.

En tout état de cause, dans les applications routières, cet enrobé ne peut servir que comme couche d'assise, du fait qu'il ne présente pas de propriétés d'adhérence suffisantes et qu'il présente un aspect de surface fermé, lisse, sans trous, ni rugosité. Il est donc nécessaire de recouvrir cette couche d'assise d'une couche de roulement pouvant être un enrobé traditionnel, comme, par exemple, un béton-bitumineux. Cette couche de roulement a pour rôle d'assurer une bonne protection thermique et, de par sa rugosité, une bonne adhérence pour les véhicules. Cet enrobé peut également être utilisé comme sol industriel pouvant supporter de lourdes charges et des ancrages.

Les exemples qui suivent illustrent l'invention, sans toutefois la limiter.

### EXEMPLE 1

Cet exemple vise à démontrer l'utilisation selon l'invention d'un bitume très dur dans la préparation d'un enrobé comme matériau d'assise et, plus particulièrement, dans la construction de chaussées neuves.

On réalise une chaussée de type classique en utilisant les matériaux suivants : une couche de roulement en béton bitumineux posée sur deux épaisseurs de grave-ciment (matériau traité aux liants hydrauliques), elles-mêmes posées sur le sol.

La structure de cette chaussée de référence, que l'on peut trouver dans le Catalogue des Structures LCPC - SETRA relatif à la construction des chaussées neuves, est la suivante :

- une couche d'une épaisseur de 14 cm de béton bitumineux,
- deux couches, d'une épaisseur respective de 25 cm et 20 cm, de grave-ciment.

On souhaite réaliser une chaussée mécaniquement équivalente en utilisant, conformément à l'invention, un bitume très dur pour la préparation de l'enrobé (noté $E_1$) servant de couche d'assise.

L'enrobé $E_1$ est préparé à partir de :

1/ un bitume jouant le rôle de liant, dont les caractéristiques sont les suivantes :

- pénétrabilité à 25 °C selon la norme AFNOR 66004 : 7 dixièmes de mm,
- température de ramollissement selon la norme AFNOR NFT 66-008 : 90,5 °C ;

2/ un matériau inorganique de type matériaux Meilleraie d'une granulométrie de 0/14 selon la norme P 18101 et dont la formulation est la suivante :

- 42 % de sable          0/2,
- 10 % de gravillons       2/4,
- 10 % de gravillons       4/6,
- 13 % de gravillons       6/10,
- 23 % de gravillons        10/14,
- 2 % d'un filler.

L'enrobé $E_1$ ainsi préparé a les caractéristiques suivantes :

- module de rigidité à 15°C et 10 Hz : $24.10^3$ MPa,
- masse volumique réelle selon la norme NFT 98-140: 2,61 g/cm$^3$,
- module de richesse choisi : 4,04, correspondant à une teneur en bitume dans l'enrobé, selon la norme NFP 98-140, de 6,5 parties pour cent en poids.

La chaussée comprend : une couche de roulement en béton bitumineux posée sur une couche d'enrobé $E_1$, elle-même posée sur une couche de sable bitumineux, elle-même posée sur le sol.

L'optimisation des épaisseurs d'enrobé E1 nécessaires à la construction de cette chaussée est réalisée à partir de la modélisation type ALIZE III du Laboratoire Central des Ponts et Chaussées (en abrégé L.C.P.C.). Les valeurs retenues pour le dimensionnement de cette chaussée sont les suivantes :

- une couche d'une épaisseur de 14 cm de béton bitumineux,
- une couche constituée de deux épaisseurs, l'une de 10 cm et l'autre de 12 cm, d'enrobé $E_1$,
- une couche d'une épaisseur de 2 cm de sable-bitume.

Ces résultats montrent que, pour construire une chaussée équivalente aux structures classiques proposées dans le Catalogue des Structures LCPC-SETRA, il est possible d'utiliser, selon l'invention, le bitume $B_1$ pour préparer l'enrobé $E_1$ destiné à la couche d'assise. Il peut donc remplacer les matériaux traités aux liants hydrauliques utilisés jusqu'ici, et il présente également l'avantage d'être utilisé en quantité beaucoup moins importante. Ainsi, son utilisation permet de réduire notablement l'épaisseur globale de la chaussée.

## EXEMPLE 2

Cet exemple vise à illustrer l'utilisation selon l'invention d'un bitume très dur dans la préparation d'un enrobé comme matériau d'assise et, plus particulièrement, dans le renforcement d'une chaussée existante.

On réalise le renforcement d'assise d'une chaussée en utilisant les matériaux suivants : une couche de roulement en béton bitumineux posée sur une couche de grave-ciment (matériau traité au liant hydraulique), elle-même posée sur l'ancienne chaussée, elle-même posée sur le sol.

La structure de cette chaussée de référence, que l'on peut trouver dans le Catalogue des Structures LCPC-SETRA relatif au renforcement des chaussées, est la suivante :

- une couche d'une épaisseur de 8 cm de béton bitumineux,
- une couche d'une épaisseur de 25 cm de grave-ciment,
- reposant sur une épaisseur de 25 cm de l'ancienne chaussée.

On souhaite renforcer cette chaussée en utilisant, conformément à l'invention, le bitume très dur $B_1$ décrit dans l'exemple 1 pour la préparation de l'enrobé $E_1$ remplaçant la couche d'assise en grave-ciment.

L'enrobé E1 est préparé de la même manière que dans l'exemple 1.

Le renforcement de la chaussée est réalisé de la façon suivante : une couche de roulement en béton bitumineux posée sur une couche d'enrobé E1, elle-même posée sur l'ancienne chaussée, elle-même posée sur le sol.

L'optimisation des épaisseurs d'enrobé E1 nécessaires au renforcement de la chaussée est réalisée à partir de la modélisation type ALIZE III du LCPC. Les valeurs retenues pour le dimensionnement de cette chaussée sont les suivantes :

- une couche d'une épaisseur de 8 cm de béton bitumineux,
- une couche d'une épaisseur de 13 cm d'enrobé E1,
- reposant sur une épaisseur de 25 cm d'ancienne chaussée.

Ces résultats montrent que, pour renforcer une chaussée de manière équivalente à celle proposée dans le Catalogue des Structures LCPC-SETRA, il est possible d'utiliser selon l'invention le bitume B1 pour préparer l'enrobé E1 destiné à la couche d'assise.

Cet enrobé peut donc remplacer les matériaux traités aux liants hydrauliques utilisés jusqu'ici, et il présente également l'avantage d'être utilisé en quantité beaucoup moins importante que ceux-ci. Ainsi, son utilisation permet de réduire notablement l'épaisseur globale de la chaussée.

## EXEMPLE 3

Cet exemple vise à montrer que les performances de résistance à l'orniérage et de tenue au désenrobage par l'eau de l'enrobé E1 préparé selon l'invention sont comparables à celles des enrobés bitumineux de la technique antérieure utilisés comme assise de chaussée.

L'enrobé E1 est préparé de la même manière que dans l'exemple 1.

Le matériau bitumineux type grave-bitume de la technique antérieure choisi pour être comparé à l'enrobé E1 est un enrobé de type grave-bitume (noté GB) dont les caractéristiques sont données dans la norme NFT 98-138 et comprenant :

1/ un bitume (noté B'), jouant le rôle de liant et présentant les caractéristiques suivantes :

- pénétrabilité à 25 °C selon la norme AFNOR 66-004 : 40 dixièmes de mm,
- point de ramollissement selon la norme AFNOR NFT 66-008 : 54 °C,

2/ un matériau inorganique de type matériaux Meilleraie d'une granulométrie de 0/14 selon la norme P18101 et dont la formulation est la suivante :

- 42 % de sable          0/2,
- 10 % de gravillons          2/4,
- 10 % de gravillons          4/6,

- 13 % de gravillons        6/10,
- 23 % de gravillons        10/14,
- 2 % d'un filler.

L'enrobé GB ainsi préparé a les caractéristiques suivantes :

- masse volumique réelle selon la norme NFT 98-138 : 2,62 g/cm$^3$,
- module de richesse : 2,8 correspondant à une teneur du liant dans l'enrobé de 4,25 parties pour cent en poids.

Les tests suivants ont été réalisés sur l'enrobé E1 préparé selon l'invention et sur l'enrobé GB :

a) des essais d'orniérage mesurés à 60 °C, après 30 000 cycles, selon la norme NFT 98-253-1,
b) des essais de tenue au désenrobage par l'eau, réalisés par mesure de la résistance à l'écrasement à 18 °C après immersion dans l'eau et compression selon la méthode DURIEZ, d'après la norme NFT 98-251-1,

Les résultats obtenus relatifs aux deux enrobés sont présentés dans le TABLEAU I ci-après :

TABLEAU I

| PROPRIETES | Enrobé E1 | Enrobé GB |
|---|---|---|
| Profondeur moyenne de l'ornière (mm) après 30 000 cycles | 1,8 | 2,0 |
| Rapport immersion-compression à 18°C (MPa) | 1,0 | 0,90 |

Les résultats du Tableau I montrent que l'enrobé E1 préparé selon l'invention présente des performances de résistance à l'orniérage et de tenue au désenrobage par l'eau aussi élevées que celles de l'enrobé GB.

## EXEMPLE 4

Cet exemple vise à montrer que les performances de l'enrobé E1 préparé selon l'invention sont au moins comparables à celles des matériaux de la technique antérieure utilisés comme assise de chaussée, en particulier, comparativement aux propriétés de rigidité des matériaux hydrauliques type grave-laitier ou grave-ciment.
L'enrobé E1 selon l'invention est préparé de la même manière que dans l'exemple 1.
Le matériau hydraulique type grave-laitier ou grave-ciment de la technique antérieure choisi pour être comparé à l'enrobé E$_1$ est une grave-ciment (noté GC).
Les tests suivants ont été réalisés sur l'enrobé E1 préparé selon l'invention et sur le matériau GC :

a) des essais de résistance à la traction directe à 15 °C et à la vitesse de 1 mm/minute selon la méthode TOTAL précitée, en déterminant l'épaisseur de la couche d'assise d'enrobé à module très élevé à partir des valeurs de $\sigma_6$ provenant d'un essai de résistance en fatigue à contrainte imposée ("σ6" correspond comme indiqué ci-dessus à une contrainte exercée en traction-compression sur l'enrobé entraînant la rupture dudit enrobé après $10^6$ cycles de chargement à 15 °C et 25 Hz),
b) des essais de résistance en fatigue à contrainte imposée à 15 °C et 25 Hz, pour mesurer la contrainte à la rupture $\sigma_6$ de l'enrobé après $10^6$ cycles de chargement en traction-compression, selon la norme NFP 98-261-1,
c) une mesure du module de rigidité à 15°C et 10 Hz.

Les résultats obtenus relatifs aux deux enrobés sont présentés dans le TABLEAU II ci-après :

TABLEAU II

| PROPRIETES | Enrobé E$_1$ | Grave ciment GC |
|---|---|---|
| Résistance à la traction $\sigma_R$ (MPa) | 4,56 | Après 7 jours : 0,51 Après 360 jours : 1,88 |
| Contrainte à la rupture $\sigma_6$ (MPa) | 1,5 | 0,9 |

TABLEAU II   (suite)

| PROPRIETES | Enrobé $E_1$ | Grave ciment GC |
|---|---|---|
| Module de rigidité (MPa) | $25.10^3$ | $25.10^3$ |

Les résultats du Tableau II montrent que la résistance à la traction directe de l'enrobé E1 préparé selon l'invention est très supérieure à celle du matériau GC, même lorsque celui-ci atteint sa valeur optimale après 360 jours. On peut noter, par ailleurs, que les hautes performances de l'enrobé E1 sont immédiatement disponibles, contrairement à celles du matériau GC, qui exige plusieurs mois de prise.

D'autre part, ces résultats montrent que l'enrobé E1 présente une rigidité aussi bonne que celle du matériau GC, tout en offrant, contrairement à ce dernier, une bonne résistance à la fatigue.

## Revendications

1. Utilisation d'un bitume très dur, possédant une pénétrabilité à 25°C comprise entre 0 et 20, dans la préparation d'un enrobé bitumineux dont le module de rigidité est supérieur à $24.10^3$ MPa, destiné notamment à la réalisation ou au renforcement de chaussées, **caractérisée en ce que** la teneur en bitume de l'enrobé est supérieure à 6 parties pour cent en poids.

2. Utilisation d'un bitume selon la revendication 1, **caractérisée en ce que** la teneur en bitume de l'enrobé est comprise entre 6 et 8 parties pour cent en poids.

3. Utilisation d'un bitume selon l'une des revendications 1 et 2, dans la préparation d'un enrobé bitumineux possédant une épaisseur inférieure à 30 cm pour la réalisation de chaussées.

4. Utilisation d'un bitume selon la revendication 3, dans la préparation d'un enrobé bitumineux possédant une épaisseur comprise entre 5 et 20 cm.

5. Utilisation d'un bitume selon l'une des revendications 1 à 4, **caractérisée en ce que** sa pénétrabilité est comprise entre 0 et 10.

6. Utilisation d'un bitume selon l'une des revendications 1 à 5, **caractérisée en ce que** le bitume est un bitume naturel.

7. Utilisation d'un bitume selon l'une des revendications 1 à 6, **caractérisée en ce que** le bitume est un bitume synthétique.

8. Enrobé bitumineux, destiné notamment à la réalisation ou au renforcement de chaussées, **caractérisé en ce qu'**il contient plus de 6 parties pour cent en poids d'un bitume ayant une pénétrabilité à 25°C comprise entre 0 et 20 et dont le module de rigidité est supérieur à $24.10^3$ Mpa.

9. Enrobé bitumineux selon la revendication 8, **caractérisé en ce qu'**il possède une tenue en fatigue à la contrainte imposée conduisant à une valeur de $\sigma_6$ comprise entre 1 MPa et 2,5 MPa à 15°C et 25 Hz.

10. Enrobé bitumineux selon l'une des revendications 8 et 9, **caractérisé en ce qu'**il possède un module de rigidité supérieur à $24.10^3$ MPa à 15 °C et 10 Hz.

11. Enrobé bitumineux selon l'une des revendications 8 à 10, **caractérisé en ce qu'**il possède un module de richesse compris entre 3,8 et 4,5.

12. Enrobé bitumineux selon l'une des revendications 8 à 11, **caractérisé en ce qu'**il possède une compacité supérieure à 95 %.

13. Enrobé bitumineux selon l'une des revendications 8 à 12, **caractérisé en ce qu'**il a été préparé par mélange de bitume et d'un matériau inorganique à une température comprise entre 180 et 200 °C.

**Patentansprüche**

1. Verwendung eines sehr harten Bitumens, welcher eine Durchdringbarkeit bei 25°C zwischen einschließlich 0 und 20 aufweist, zur Herstellung eines bituminösen Mischguts, dessen Steifigkeitsmodul über 24 x $10^3$ MPa liegt, insbesondere bestimmt zur Herstellung oder zur Verstärkung von Straßen, **dadurch gekennzeichnet, daß** der Gehalt des Bitumen am Mischgut mehr als 6 Gewichtsprozent-Teile beträgt.

2. Verwendung eines Bitumens gemäß Anspruch 1, **dadurch gekennzeichnet, daß** der Gehalt des Bitumens am Mischgut zwischen einschließlich 6 und 8 Gewichtsprozent-Teilen beträgt.

3. Verwendung eines Bitumens gemäß einem der Ansprüche 1 und 2 zur Herstellung eines bituminösen Mischguts, welches eine Dicke von weniger als 30 cm für die Herstellung von Straßen besitzt.

4. Verwendung eines Bitumens gemäß Anspruch 3 zur Herstellung eines bituminösen Mischguts, welches eine Dicke zwischen einschließlich 5 und 20 cm besitzt.

5. Verwendung eines Bitumens gemäß einem der Ansprüche 1 bis 4, **dadurch gekennzeichnet, daß** die Druchdringbarkeit zwischen einschließlich 0 und 10 liegt.

6. Verwendung eines Bitumens gemäß einem der Ansprüche 1 bis 5, **dadurch gekennzeichnet, daß** der Bitumen ein natürlicher Bitumen ist.

7. Verwendung eines Bitumens gemäß einem der Ansprüche 1 bis 6, **dadurch gekennzeichnet, daß** der Bitumen ein synthetischer Bitumen ist.

8. Bituminöses Mischgut, insbesondere bestimmt zur Herstellung oder zur Verstärkung von Straßen, **dadurch gekennzeichnet, daß** es mehr als 6 Gewichtsprozent-Teile eines Bitumens enthält, welcher eine Durchdringbarkeit bei 25°C zwischen einschließlich 0 und 20 aufweist und dessen Steifigkeitsmodul mehr als 24 x $10^3$ MPa beträgt.

9. Bituminöses Mischgut gemäß Anspruch 8, **dadurch gekennzeichnet, daß** es einen Ermüdungsgrad bei einer auferlegten Belastung, die bei einem $\sigma_6$-Wert durchgeführt wird, zwischen einschließlich 1 MPa und 2,5 MPa bei 15°C und 25 Hz aufweist.

10. Bituminöses Mischgut gemäß einem der Ansprüche 8 und 9, **dadurch gekennzeichnet, daß** es ein Steifigkeitsmodul von mehr als 24 x $10^3$ MPa bei 15°C und 10 Hz aufweist.

11. Bituminöses Mischgut gemäß einem der Ansprüche 8 bis 10, **dadurch gekennzeichnet, daß** es ein Ergiebigkeitsmodul zwischen einschließlich 3,8 und 4,5 aufweist.

12. Bituminöses Mischgut gemäß einem der Ansprüche 8 bis 11, **dadurch gekennzeichnet, daß** es eine Kompaktheit von über 95% aufweist.

13. Bituminöses Mischgut gemäß einem der Ansprüche 8 bis 12, **dadurch gekennzeichnet, daß** es hergestellt worden ist durch Vermengung von Bitumen und einem anorganischen Material bei einer Temperatur zwischen einschließlich 180 und 200°C.

**Claims**

1. Use of a very hard bitumen, having a penetrability at 25°C of between 0 and 20, in preparing a bituminous paving mix, the rigidity modulus of which is greater than 24.$10^3$ MPa, intended in particular for the production or reinforcement of roadways, **characterised in that** the bitumen content of the paving mix is greater than 6 parts per hundred by weight.

2. Use of a bitumen according to claim 1, **characterised in that** the bitumen content of the paving mix is between 6 and 8 parts per hundred by weight.

3. Use of a bitumen according to one of claims 1 and 2, in preparing a bituminous paving mix with a thickness of less than 30 cm for the production of roadways.

4. Use of a bitumen according to claim 3, in preparing a bituminous paving mix with a thickness of between 5 and 20 cm.

5. Use of a bitumen according to one of claims 1 to 4, **characterised in that** its penetrability is between 0 and 10.

6. Use of a bitumen according to one of claims 1 to 5, **characterised in that** the bitumen is a natural bitumen.

7. Use of a bitumen according to one of claims 1 to 6, **characterised in that** the bitumen is a synthetic bitumen.

8. A bituminous paving mix, intended in particular for the production or reinforcement of roadways, **characterised in that** it contains more than 6 parts per hundred by weight of a bitumen having a penetrability at 25°C of between 0 and 20 and whose rigidity modulus is greater than $24.10^3$ MPa.

9. A bituminous paving mix according to claim 8, **characterised in that** it exhibits a fatigue resistance to the stress imposed which gives a value of $\sigma_6$ of between 1 MPa and 2.5 MPa at 15°C and 25 Hz.

10. A bituminous paving mix according to one of claims 8 and 9, **characterised in that** it exhibits a rigidity modulus greater than $24.10^3$ MPa at 15°C and 10 Hz.

11. A bituminous paving mix according to one of claims 8 to 10, **characterised in that** it exhibits a binder percentage of between 3.8 and 4.5.

12. A bituminous paving mix according to one of claims 8 to 11, **characterised in that** it exhibits a compactness of greater than 95%.

13. A bituminous paving mix according to one of claims 8 to 12, **characterised in that** it was prepared by mixing bitumen and an inorganic material at a temperature or between 180 and 200°C.